# EUROPEAN PATENT APPLICATION

(11) **EP 1 480 412 A1**
(43) Date of publication of application: **24.11.2004**
(21) Application number: 04252621.0
(22) Date of filing: 05.05.2004
(51) Int. Cl.: H04L 29/06

(54) **Method for sending multiple ephemeral terminations in a single ServiceChange message**

(30) Priority: 30.07.2003 US 630191; 22.05.2003 US 472811 P
(71) Applicant: LUCENT TECHNOLOGIES INC., Murray Hill, New Jersey 07974-0636 (US)
(72) Inventor: Pelaez, Mariana Benitez, Naperville Illinois 60563 (US)
(74) Representative: Watts, Christopher Malcolm Kelway, Dr.

(57) **Abstract**

The present invention provides a method for taking multiple ephemeral terminations out of service or restored into service utilizing a single service change command. A group of termination IDs is sent within a single Service Change Command. The group of ephemeral termination IDs can be in the form of a list, ranges, or a combination of a list and a range of termination IDs. By including a plurality of ephemeral termination IDs in a single service change command, the number of messages required between the Media Gateway Controller (MGC) and the Media Gateway (MGW) is decreased. Reducing the number of messages makes more efficient use of system bandwidth.

## Description

### FIELD OF THE INVENTION

The present invention relates generally to communication systems, and more particularly to a method for changing the service state of a termination.

### BACKGROUND OF THE INVENTION

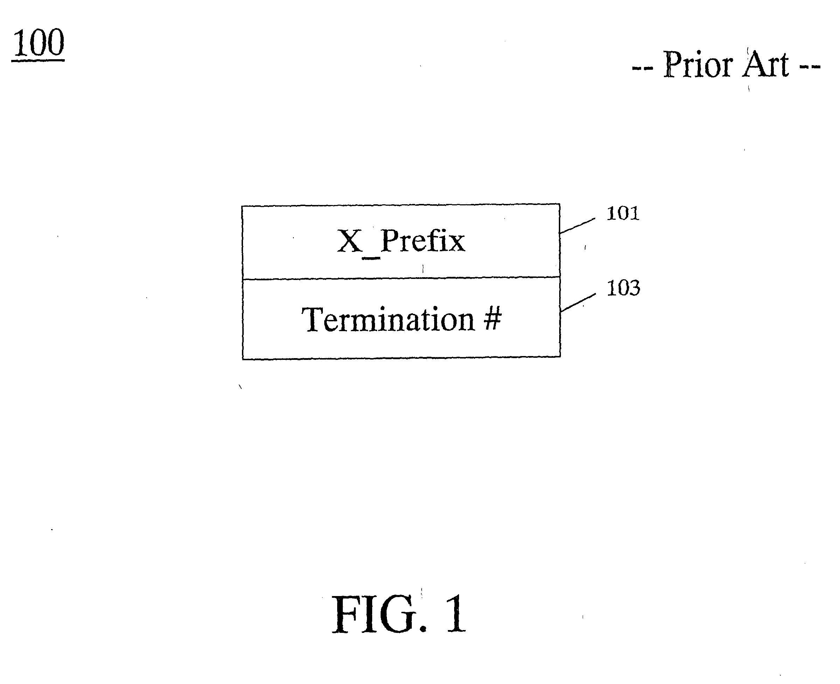

FIG. 1 depicts an ephemeral termination ID structure 100 in accordance with the prior art. Ephemeral termination ID message 100 includes X_Prefix 101 and termination number 103. X_Prefix 101 is preferably an alphanumeric string and termination number 103 is preferably numeric. X_Prefix 101 can be, for example, an Asynchronous Transfer Mode (ATM) prefix, an Internet Protocol (IP) prefix, or a more general Ephemeral Prefix.

Each termination has a Termination Identifier (also referred to as TerminationID) that allows both a Media Gateway Controller (MGC) and a Media Gateway (MGW) to identify a specific Termination.

A TerminationID structure for a physical termination may have a hierarchical structure e.g. Levell/Level.1x , and when this is the case H.248 allows for 'wildcarding' ALL terminations in Level 1 by doing Levell/*. For ephemeral terminations, there is no corresponding hierarchical structure as it exists for physical terminations.

In ephemeral terminations, such as Real Transport Protocol (RTP) flows, a hierarchical approach to the structure of TerminationIDs realistically is not possible, since the actual physical bearer route is not identified until after the initial termination is added. Given this constraint, individual service change messages are currently sent per termination, and there is no mechanism utilizing the current structure to group service change messages into a single service change command.

Currently, there is no hierarchy for the termination ID structure of present ephemeral terminations. This is typically the case since when initially adding the termination to a MGW, the remote address is typically not known at the time. It is therefore difficult to impose any hierarchy onto the termination ID structure.

Therefore, if a group of ephemeral terminations need to be taken out of service, there is no mechanism to group this set of ephemeral terminations into a single service change message.

Consequently, utilizing the ITU-T H.248 standard, for example, the MGW sends a Service Change command to notify the MGC that a Termination or group of Terminations is about to be taken out of service or has just been returned to service. Therefore, an individual service change message needs to be sent for each ephemeral termination. This requires additional processing and utilizes excessive bandwidth.

Therefore, a need exists for a method that allows a group of ephemeral terminations to be taken out of service in a more efficient manner.

### BRIEF SUMMARY OF THE INVENTION

The present invention provides a method for taking multiple ephemeral terminations out of service utilizing a single service change command. The present invention accomplished this by sending a list of termination IDs within a single Service Change Command.

The present invention provides a single service change command that includes a list of termination IDs. By including a plurality of ephemeral termination IDs in a single service change command, the present invention reduces the number of messages required between the Media Gateway Controller (MGC) and the Media Gateway (MGW). Reducing the number of messages makes more efficient use of system bandwidth.

### BRIEF DESCRIPTION OF THE SEVERAL VIEWS OF THE DRAWINGS

FIG. 1 depicts an ephemeral termination ID structure in accordance with the prior art.

FIG. 2 depicts a service change parameter in accordance with an exemplary embodiment of the present invention.

FIG. 3 depicts the extension field of a service change message in accordance with an exemplary embodiment of the present invention.

FIG. 4 depicts an exemplary service change message in accordance with the ITU-T H.248 standard in accordance with an exemplary embodiment of the present invention.

FIG. 5 depicts a flow chart of a method for sending multiple ephemeral terminations IDs to be taken out of service in a service change message.

FIG. 6 depicts a flow chart of a method for receiving multiple ephemeral terminations IDs to be taken out of service in a service change message.

### DETAILED DESCRIPTION OF THE INVENTION

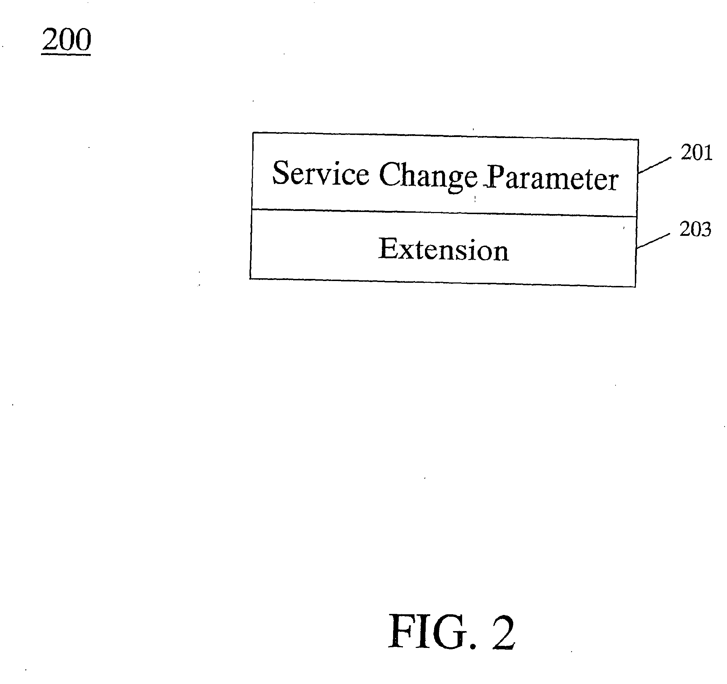

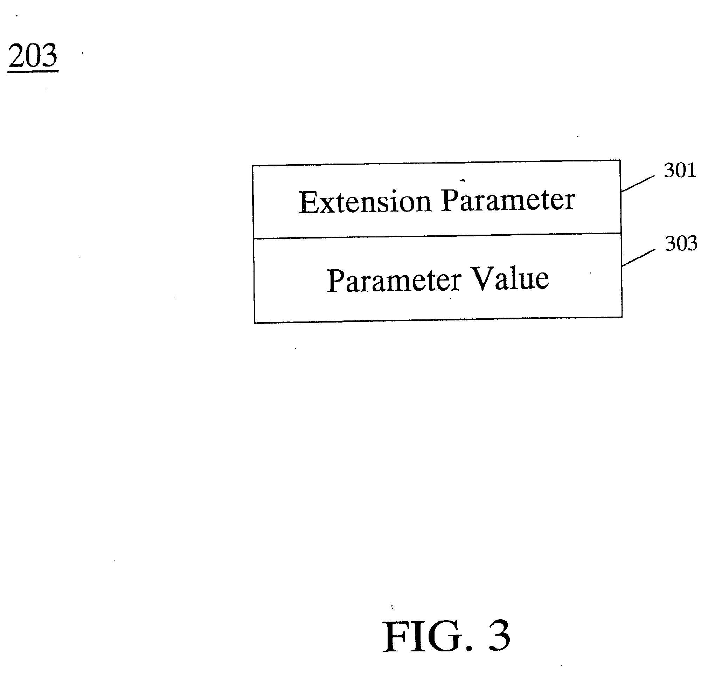

The present invention can be better understood with reference to FIGs. 2 through 6. FIG. 2 depicts a service change parameter 200 in accordance with an exemplary embodiment of the present invention. In an exemplary embodiment, service change parameter 200 is an ITU-T H.248 message. In an exemplary embodiment, service change parameter 200 includes service change parameter field 201 and extension field 203. Service change parameter can be set to a method, reason, delay, address, profile, version, timestamp, or mgcid. In order to group a number of Termination IDs into a single service change command, the present invention makes use of extension field 203, as depicted in FIG. 3.

Service change parameter 200 is a command as part of an ITU-T H.248 message that indicates the service change requested. In the preferred embodiment, service change parameter 200 can include serviceChangeMethod, serviceChangeReason, serviceChangeDelay, serviceChangeAddress, serviceChangeProfile, extension, TimeStamp, serviceChangeMgcId, and/or serviceChangeVersion.

FIG. 3 depicts extension field 203 of service change parameter 200 in accordance with an exemplary embodiment of the present invention. Extension field 203 comprises extension parameter field 301 and parameter value field 303.

Extension parameter field 301 includes an identifier ID for the specific paramValue of the extension. In an exemplary embodiment of the present invention, extension parameter field 301 includes the value of "X-TermID".

Parameter value field 303 preferably includes the value of the ephemeral terminations to be taken out of service (in the form of a list of Termination IDs and/or ranges of termination IDs). As an example of an exemplary embodiment of the present invention, parameter value field 303 can include a list of termination IDs to be taken out of service, a range of termination IDs to be taken out of service, or a combination of a list and range of termination IDs. A first exemplary embodiment of a list of termination IDs would be {RTP/1, RTP/3, RTP/4}, which indicates that termination IDs 1, 3, and 4 should be taken out of service. A second exemplary embodiment of a range of termination IDs to be taken out of service would be {RTP/1:RTP/6}, which indicates that the range of termination IDs 1 through 6 should be taken out of service. A third exemplary embodiment of the present invention, including a combination of a list and a range of termination IDs, would be {RTP/1, RTP/4:RTP/7, RTP/30}, in which embodiment termination IDs 1, 4, 5, 6, 7, and 30 would be taken out of service.

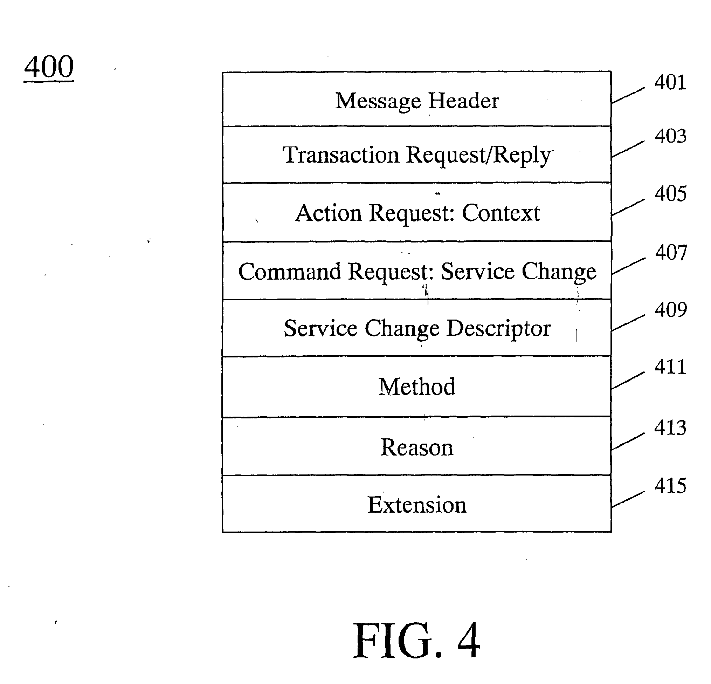

FIG. 4 depicts an exemplary service change message 400 in accordance with the ITU-T H.248 standard in accordance with an exemplary embodiment of the present invention. Service change message 400 preferably comprises a message header field 401, a transaction request/reply field 403, an action request with a context ID field 405, a command request indicating a service change field 407, a service change descriptor 409. Service change descriptor 409 preferably comprises a method field 411, a reason field 413, and an extension field 415.

In an exemplary embodiment of the present invention, service change message 400 is configured in accordance with the ITU-T H.248 standard. In an exemplary embodiment of the present invention, message header field 401 comprises MEGACO/1 [x.x.x.x]:yyyy. Transaction request/reply field 403 is set to value of "1". Action request with a context ID field 405 is set to "-". The termination ID is set to a unique value to indicate that the extension field of the message includes the list of termination IDs this H.248 message refers to. Method field 411 is set to "forced". Reason field 413 is set to "905".

Extension field 415 is preferably set to the ephemeral terminations that are to be taken out of service. Extension field 415 preferably comprises an extension parameter field and a parameter field, as depicted in FIG. 3. In an exemplary embodiment of the present invention, extension field 415 is set to X-TermID={RTP/6, RTP/10}. In this embodiment, ephemeral termination ID numbers 6 and 10 will be taken out of service, from this single service change message. In a further exemplary embodiment, a range of ephemeral termination IDs can be included within extension field 415 in the parameter value field. For example, extension field 415 could be set to X-TermID={RTP/1:RTP/6}, in which case ephemeral termination messages with termination IDs between 1 and 6 would be taken out of service. In a further exemplary embodiment, a combination of a list and range of termination IDs can be included in a single service change message. In this exemplary embodiment, extension field 415 could be set to, for example, X-TermID={RTP/1, RTP/4:RTP/7, RTP/30}, in which case termination IDs 1, 4, 5, 6, 7, and 30 would be taken out of service from a single service change message.

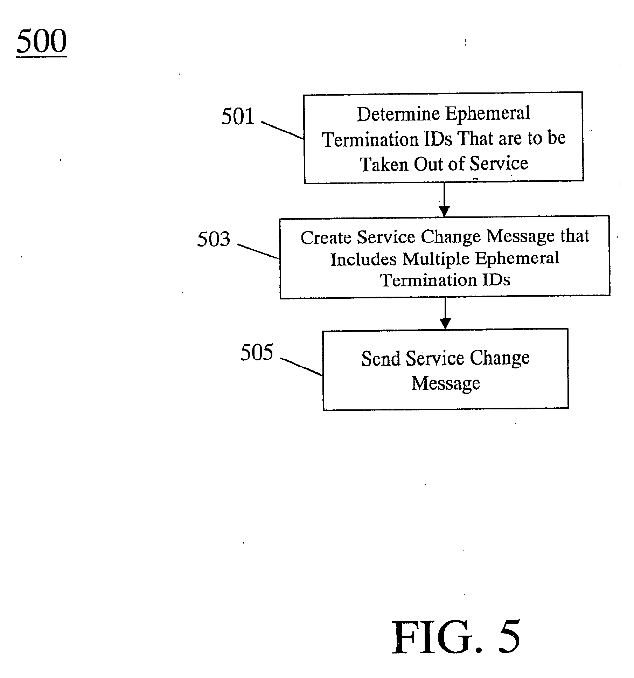

FIG. 5 depicts a flow chart 500 of a method for sending multiple ephemeral terminations IDs to be taken out of service in a service change message. It should be understood that the present invention can also be used to send multiple ephemeral termination IDs to be restored into service in a service change message.

The Media Gateway (MGW) determines (501) a group of ephemeral termination IDs that are to be taken out of service. For example this determination can be made based upon a DSP (Digital Signal Processor) failure that affects more than one termination, an ATM (Asynchronous Transfer Mode) Switched Virtual Circuit (SVC) failure, or an RTP/RTCP (Realtime Transport Protocol) timeout failure. The MGW can be, for example, a Cisco Media Gateway.

The Media Gateway (MGW) creates (503) a service change message that includes reference to multiple ephemeral termination IDs. The service change message would be a message in accordance with FIGs. 2 through 4.

The Media Gateway (MGW) sends (505) the service change message that includes an indication of a plurality of ephemeral termination IDs that are to be taken out of service. The service change message is preferably sent via the H.248 interface.

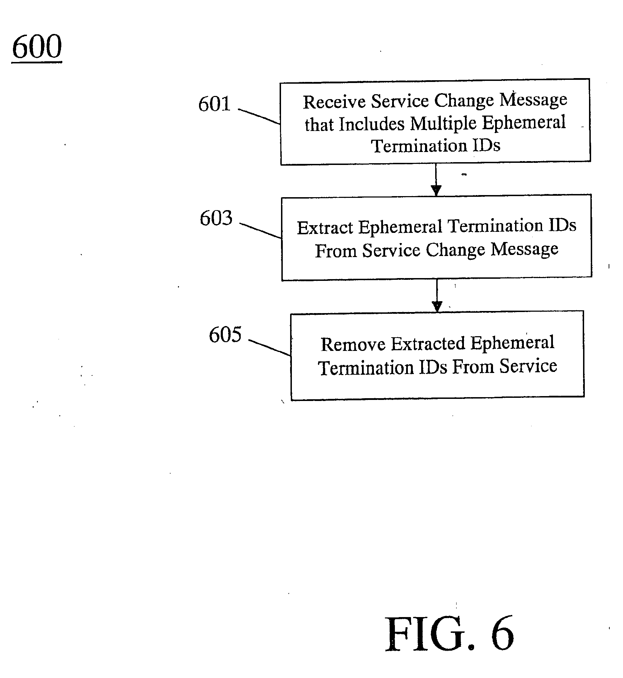

FIG. 6 depicts a flow chart of a method 600 for receiving multiple ephemeral terminations IDs to be taken out of service in a service change message. It should be understood that the present invention can also be used to receive multiple ephemeral termination IDs to be restored into service in a service change message.

The Media Gateway Controller (MGC) receives (601) the service change message that includes an indication of a plurality of ephemeral termination IDs that are to be taken out of service. The service change message is preferably received by the MGC and passes through an H.248 parser. Alternately, the service change message passes through a number of different software layers, with each layer performing the appropriate action. For the LSS (Lucent SoftSwitch), the service change message is parsed and processed by the H.248 Device Server and then some "state of termination" information is passed to the Call Server. The MGC can be, for example, a Lucent SoftSwitch.

The Media Gateway Controller (MGC) extracts (603) the multiple ephemeral termination IDs that are to be taken out of service from the service change message. This is preferably accomplished by looking at the extension field of the Service Change Parameter, where the list and/or range of termination IDs was placed in the ParamValue field.

The Media Gateway Controller (MGC) removes (605) the group of ephemeral termination IDs from service. The removal is dependent upon the type of error that is causing the group of ephemeral terminations to be taken out of service. For example, there can be a GUI (Graphical User Interface) indication, a channel status change, or an H.248 messages triggered towards the MGW to perform some audits, etc.

The present invention thereby provides a method that allows a group of ephemeral terminations to be taken out of service or restored into service in a more efficient manner. This is accomplished by sending a list of termination IDs within a single Service Change Command.

While this invention has been described in terms of certain examples thereof, it is not intended that it be limited to the above description, but rather only to the extent set forth in the claims that follow.

## Claims

1. A method for sending multiple ephemeral terminations IDs to be taken out of service in a service change message comprising:
determining a group of ephemeral termination IDs that are to be taken out of service;
creating a service change message that includes reference to multiple ephemeral termination IDs; and
sending the service change message that includes an indication of a plurality of ephemeral termination IDs that are to be taken out of service.

2. A method for sending multiple ephemeral terminations IDs to be taken out of service in a service change message in accordance with claim 1, wherein the step of creating a service change message comprises creating a service change message in accordance with the ITU-T H.248 standard.

3. A method for sending multiple ephemeral terminations IDs to be taken out of service in a service change message in accordance with claim 1, wherein the step of creating a service change message comprises utilizing the extension field of the service change message.

4. A method for sending multiple ephemeral terminations IDs to be taken out of service in a service change message in accordance with claim 1, wherein the step of creating a service change message comprises creating a service change message comprising a list of termination identifications that correspond to the plurality of ephemeral termination IDs that are to be taken out of service.

5. A method for sending multiple ephemeral terminations IDs to be taken out of service in a service change message in accordance with claim 1, wherein the step of creating a service change message comprises creating a service change message comprising a range of termination identifications that correspond to the plurality of ephemeral termination IDs that are to be taken out of service.

6. A method for sending multiple ephemeral terminations IDs to be taken out of service in a service change message in accordance with claim 1, wherein the step of creating a service change message comprises creating a service change message comprising a list of termination identifications and a range of termination identifications that correspond to the plurality of ephemeral termination IDs that are to be taken out of service.

7. A method for receiving multiple ephemeral terminations IDs to be taken out of service in a service change message comprising:
receiving a service change message that includes an indication of a plurality of ephemeral termination IDs that are to be taken out of service;
extracting the multiple ephemeral termination IDs that are to be taken out of service from the service change message; and
removing the group of ephemeral termination IDs from service.

8. A method for receiving multiple ephemeral terminations IDs to be taken out of service in a service change message in accordance with claim 7, wherein the step of receiving a service change message comprises receiving a service change message in accordance with the ITU-T H.248 standard.

9. A method for receiving multiple ephemeral terminations IDs to be taken out of service in a service change message in accordance with claim 7, wherein the step of extracting the multiple ephemeral termination IDs comprises utilizing the extension field of the service change message.

10. A method for receiving multiple ephemeral terminations IDs to be taken out of service in a service change message in accordance with claim 7, wherein the step of extracting the multiple ephemeral termination IDs comprises extracting a range of termination identifications that correspond to the plurality of ephemeral termination IDs that are to be taken out of service.
